# EUROPEAN PATENT APPLICATION

(11) **EP 4 410 113 A1**
(43) Date of publication of application: **07.08.2024**
(21) Application number: 22876453.6
(22) Date of filing: 29.09.2022
(51) Int. Cl.: A23L 5/00, A23L 29/10

(54) **OIL-AND-FAT COMPOSITION FOR FOOD, FOOD AND PLANT-BASED MEAT CONTAINING SAME, OLEOGEL TEXTURE-IMPROVING AGENT, AND METHOD FOR PRODUCING OIL-AND-FAT COMPOSITION FOR FOOD**

(30) Priority: 29.09.2021 JP 2021159573
(71) Applicant: Mitsubishi Chemical Corporation, Chiyoda-ku Tokyo 100-8251 (JP)
(72) Inventor: ARIMA, Satoshi, Tokyo 100-8251 (JP)
(74) Representative: Ter Meer Steinmeister & Partner
(86) International application number: PCT/JP2022/036452
(87) International publication number: WO 2023/054589

(57) **Abstract**

The present invention addresses the problem of providing an oil-and-fat composition having excellent texture and the like, such as melting in the mouth suitable for food applications. The problem is solved by an oil-and-fat composition for food, which contains an oil and fat, a wax, and a sucrose fatty acid ester.

## Description

### TECHNICAL FIELD

The present invention relates to: an oil-and-fat composition for food; a food and a plant-based meat that contain the same; an oleogel texture-improving agent; and a method of producing an oil-and-fat composition for food.

### BACKGROUND ART

An oleogel is an oil-and-fat composition which consists of a liquid oil and a small amount of gelling agent and is solidified by incorporation of the liquid oil into a network structure formed by the gelling agent. An oleogel contains no trans fatty acid and is thus considered to have less adverse effects on the body than a hydrogenated oil solidified by hydrogenation of an unsaturated fatty acid. In addition, an oleogel has a lower content ratio of saturated fatty acid than a solid fat or hydrogenated oil of an animal/vegetable oil and fat. Therefore, the intake of an oleogel is unlikely to result in an excessive intake of a saturated fatty acid that increases the risk of obesity and cardiovascular disease. For these reasons, in recent years, oleogels have been attracting attention as an alternative to solid fats and hydrogenated oils.

Patent Document 1 discloses an organogel that is to be mixed with a minced or paste food provided to a person with difficulty in swallowing and chewing. This organogel contains an oil or fat and an oil/fat gelling agent, and extremely hydrogenated oils, emulsifiers, waxes, and the like are mentioned as examples of the oil/fat gelling agent.

In Patent Documents 2 and 3, it is described that a wax oleogel can be produced by mixing an oil or fat and a wax.

### RELATED ART DOCUMENTS

### PATENT DOCUMENTS

[Patent Document 1] WO 2012/114995
[Patent Document 2] U.S. Patent Application Publication No. 2004/0052921
[Patent Document 3] WO 2021/046642

### SUMMARY OF THE INVENTION

### PROBLEMS TO BE SOLVED BY THE INVENTION

When an oleogel is used in a food application, the oleogel preferably has excellent texture and the like. However, the above-described oleogels have not been sufficiently studied in terms of texture and the like in their use in a food application. Therefore, an object of the present invention is to provide an oil-and-fat composition having excellent texture and the like, such as melting in the mouth suitable for food applications.

### MEANS FOR SOLVING THE PROBLEMS

The present inventors intensively studied to solve the above-described problem. As a result, the present inventors discovered that the properties of an oil-and-fat composition containing an oil or fat and a wax can be improved by further incorporating a sucrose fatty acid ester as an emulsifier, thereby completing the present invention.

That is, the gist of the present invention is as follows.
[1] An oil-and-fat composition for food, containing: an oil or fat; a wax; and a sucrose fatty acid ester.
[2] The oil-and-fat composition for food according to [1], containing the oil or fat, the wax, and the sucrose fatty acid ester in a total of 30 to 100% by weight,
   wherein
   a total content of the wax and the sucrose fatty acid ester is 7.5% by weight or more, and
   a content ratio (weight ratio) of the sucrose fatty acid ester with respect to the wax is 0.01 or higher and 5.0 or lower.
[3] The oil-and-fat composition for food according to [1] or [2], wherein the sucrose fatty acid ester has an HLB value of 0 or more and 5 or less.
[4] The oil-and-fat composition for food according to any one of [1] to [3], wherein a fatty acid constituting the sucrose fatty acid ester has 10 to 24 carbon atoms.
[5] The oil-and-fat composition for food according to any one of [1] to [4], wherein the wax is a vegetable wax.
[6] The oil-and-fat composition for food according to any one of [1] to [5], wherein the wax is rice bran wax or candelilla wax.
[7] The oil-and-fat composition for food according to any one of [1] to [6], which is an oleogel.
[8] The oil-and-fat composition for food according to any one of [1] to [7], wherein the food is a plant-based meat.
[9] A wax oleogel texture-improving agent, containing a sucrose fatty acid ester.
[10] A food, containing the oil-and-fat composition for food according to any one of [1] to [8].
[11] A plant-based meat, containing: the oil-and-fat composition for food according to any one of [1] to [8]; and a vegetable protein,
   wherein the plant-based meat contains 0.1 to 50% by weight of the oil-and-fat composition for food, and 10 to 90% by weight of the vegetable protein.
[12] The plant-based meat according to [11], further containing a binder.
[13] A method of producing an oil-and-fat composition for food that contains an oil or fat, a wax, and a sucrose fatty acid ester, the method including:
   the step of mixing the oil or fat, the wax, and the sucrose fatty acid ester such that a total content of the wax and the sucrose fatty acid ester is 7.5% by weight or more, and a content ratio (weight ratio) of the sucrose fatty acid ester with respect to the wax is 0.01 or higher and 5.0 or lower; and
   the step of heat-dissolving and then cooling and solidifying a mixture obtained by the previous step.
[14] A use of a sucrose fatty acid ester for improving the texture of a wax oleogel.

### EFFECTS OF THE INVENTION

According to the present invention, an oil-and-fat composition having excellent texture and the like can be provided.

### BRIEF DESCRIPTION OF THE DRAWINGS

[FIG. 1] FIG. 1 shows microscope images of Comparative Examples 1, 2, 3, 5, and 6 (drawing substitutes).
[FIG. 2] FIG. 2 shows microscope images of Examples 1, 3, and 4 (drawing substitutes).
[FIG. 3] FIG. 3 shows microscope images of Comparative Examples 7, 8, 11, and 12 (drawing substitutes).
[FIG. 4] FIG. 4 shows microscope images of Examples 5 and 7 (drawing substitutes).
[FIG. 5] FIG. 5 is a graph showing the storage modulus G' and the loss modulus G" at each strain value γ for Comparative Examples 1, 2, 3, 5, and 6.
[FIG. 6] FIG. 6 is a graph showing the storage modulus G' and the loss modulus G" at each strain value γ for Comparative Example 1 and Examples 1, 3, and 4.
[FIG. 7] FIG. 7 is a graph showing the storage modulus G' and the loss modulus G" at each strain value γ for Comparative Examples 7, 8, 11, and 12.
[FIG. 8] FIG. 8 is a graph showing the storage modulus G' and the loss modulus G" at each strain value γ for Comparative Example 7 and Example 5 and 7.
[FIG. 9] FIG. 9 is a graph showing strain values γ at tanδ = 1 for Comparative Examples 1 to 3, 5, and 6, and Examples 1, 3, and 4.
[FIG. 10] FIG. 10 is a graph showing strain values γ at tanδ = 1 for Comparative Examples 7, 8, 11, and 12, and Examples 5 and 7.
[FIG. 11] FIG. 11 shows microscope images of Examples 8, 9, and 10 (drawing substitutes).

### MODE FOR CARRYING OUT THE INVENTION

Embodiments of the present invention will now be described in detail. The following descriptions of requirements are merely examples (representative examples) of embodiments of the present invention, and the present invention is not limited thereto within the gist of the present invention. In the present specification, the expression "to" is used as an expression that includes the numerical or physical property values stated before and after "to".

One embodiment of the present invention is an oil-and-fat composition containing an oil or fat, a wax, and a sucrose fatty acid ester. The oil-and-fat composition of the present embodiment can be suitably used in food applications. That is, the oil-and-fat composition of the present embodiment is preferably an oil-and-fat composition for food. The oil-and-fat composition of the present embodiment is also preferably an oleogel solidified by incorporation of a liquid oil into a network structure of a wax (gelling agent).

In the network structure constituting the oleogel, the wax is usually in a crystalline state. Crystals of the wax in the oleogel are usually coarse, forming a rigid network structure. The size and the shape of the crystals vary depending on the conditions of nucleation and crystal growth.

As described below, the oil-and-fat composition according to one embodiment of the present invention exhibits favorable melting in the mouth. This is presumed to be because, by an interaction of the sucrose fatty acid ester with the wax, the shape of wax crystals is modified and an increase in the size of the wax crystals is inhibited, as a result of which fine wax crystals are formed. In other words, it is believed that a network structure formed by such fine crystals has a moderate rigidity at normal temperature, and is likely to be deformed or disintegrated by an external force at a temperature around the body temperature.

### <Oil or Fat>

The oil or fat contained in the oil-and-fat composition of the present embodiment is preferably an edible oil or fat. The oil or fat is also preferably an oil that is liquid at normal temperature (which is defined as 25°C in the present invention) (such an oil may be hereinafter referred to as "liquid oil or fat "). Specific examples of the liquid oil or fat include rapeseed oil, soybean oil, sunflower oil, olive oil, palm fractionated oil (palm olein), corn oil, rice bran oil, cotton seed oil, sesame oil, peanut oil, almond oil, linseed oil, perilla oil, fish oil, and medium-chain fatty acid triglyceride. Thereamong, rapeseed oil, soybean oil, sunflower oil, palm fractionated oil (palm olein), rice bran oil, linseed oil, and medium-chain fatty acid triglyceride are preferred, and rapeseed oil is particularly preferred.

The oil or fat contained in the oil-and-fat composition of the present embodiment has a melting point of preferably 15°C or lower, more preferably 5°C or lower.

The amount of a liquid oil or fat contained in the oil or fat contained in the oil-and-fat composition of the present embodiment is preferably 50% by weight or more, more preferably 75% by weight or more, still more preferably 90% by weight or more, particularly preferably 95% by weight or more.

The oil or fat contained in the oil-and-fat composition of the present embodiment may be a single kind of oil or fat, or a mixture of two or more kinds of oils or fats. The oil-and-fat composition of the present embodiment may also contain an oil or fat that is solid at normal temperature (such an oil or fat may be hereinafter referred to as "solid oil or fat "). Specific examples of the solid oil or fat include palm oil, coconut oil, cocoa oil, hydrogenated oil, beef tallow, lard, and milk fat. When a solid oil or fat is contained, the amount thereof is preferably 50% by weight or less, more preferably 25% by weight or less, still more preferably 10% by weight or less, particularly preferably 5% by weight or less, of the oil or fat contained in the oil-and-fat composition of the present embodiment.

From the standpoint of reducing the risk of obesity and cardiovascular disease, a ratio of a saturated fatty acid contained in the oil or fat is preferably low. Accordingly, the amount of a saturated fatty acid contained in the oil or fat contained in the oil-and-fat composition of the present embodiment is preferably 50% by weight or less, more preferably 25% by weight or less, still more preferably 10% by weight or less, particularly preferably 5% by weight or less.

The content of the oil or fat is usually 50% by weight or more, preferably 70% by weight or more, more preferably 90% by weight or more, but usually 99.89% by weight or less, preferably 98% by weight or less, with respect to a total amount of the oil or fat, the wax, and the sucrose fatty acid ester that are contained in the oil-and-fat composition of the present embodiment.

### <Wax>

The wax contained in the oil-and-fat composition of the present embodiment may be any of a synthetic wax, a vegetable wax, or an animal wax. The wax is preferably a vegetable wax. Specific examples of the vegetable wax include, but not particularly limited to: rice bran wax, carnauba wax, sunflower wax, candelilla wax, berry wax, corn wax, beeswax, jojoba wax, and ouricury wax. Thereamong, rice bran wax and candelilla wax are preferred. These waxes may be used singly, or in combination of two or more kinds thereof.

From the standpoint of improving the melting in the mouth, the melting point of the wax is preferably 90°C or lower. A lower limit thereof is not particularly limited; however, it is preferably 25°C or higher, more preferably 40°C or higher.

The wax contains a wax ester and/or a hydrocarbon. The wax ester and the hydrocarbon that are contained in the wax preferably each have 20 to 70 carbon atoms.

The term "wax ester" used herein refers to a compound in which a fatty acid and an aliphatic alcohol form an ester bond. The number of carbon atoms of the wax ester is more preferably 30 or more, still more preferably 40 or more, but more preferably 62 or less.

The number of carbon atoms of the hydrocarbon contained in the wax is preferably 60 or less, and more preferably 40 or less.

When the number of carbon atoms of the wax ester and that of the hydrocarbon are in the above-described respective ranges, a crystal network for the formation of a gel is likely to be formed, which is preferred. Further, the hydrocarbon is preferably a chain hydrocarbon, and this chain hydrocarbon may be linear or branched.

A ratio of the wax ester in the wax is not particularly limited; however, it is usually 15% by weight or more, preferably 80% by weight or more, more preferably 90% by weight or more, but usually 98% by weight or less. A ratio of the hydrocarbon in the wax is usually 0.1% by weight or more and 75% by weight or less.

In the present embodiment, the wax may also contain a component other than the wax ester and the hydrocarbon. Specific examples of such other component include fatty acids, aliphatic alcohols, resins, and hydroxy acid esters.

The size of the crystals of the wax contained in the oil-and-fat composition of the present embodiment is preferably large from the standpoint of allowing the oil-and-fat composition of the present embodiment to have a moderate hardness at normal temperature; however, it is preferably small from the standpoint of allowing the oil-and-fat composition to be easily deformed or disintegrated by an external force at a high temperature such as oral temperature, and thereby improving the melting in the mouth. Accordingly, the size of the crystals of the wax contained in the oil-and-fat composition of the present embodiment is preferably 0.1 µm or larger, more preferably 1.0 um or larger, but preferably 20 µm or smaller, more preferably 10 um or smaller. Particularly, when the wax contained in the oil-and-fat composition of the present embodiment is rice bran wax, the size of its crystals is preferably 1.0 um or larger, more preferably 2.0 µm or larger, but preferably 15 um or smaller, more preferably 10 um or smaller. Further, when the wax contained in the oil-and-fat composition of the present embodiment is candelilla wax, the size of its crystals is preferably 0.1 µm or larger, more preferably 1.0 um or larger, but preferably 7.0 um or smaller, more preferably 3.5 µm or smaller.

The size of the crystals of the wax can be determined by observation under a microscope. Specifically, the oil-and-fat composition is heat-melted, thinly spread on a glass slide, and then observed under a polarization microscope at normal temperature. Using an image analysis software (WinROOF2015), the long-side length of each crystal is measured, and an average of the values measured for at least 20 crystals is calculated.

The content of the wax is usually 0.1% by weight or more, preferably 0.5% by weight or more, more preferably 1.0% by weight or more, but usually 50% by weight or less, preferably 25% by weight or less, more preferably 15% by weight or less, with respect to a total amount of the oil or fat, the wax, and the sucrose fatty acid ester that are contained in the oil-and-fat composition of the present embodiment.

### <Sucrose Fatty Acid Ester>

In the present embodiment, the sucrose fatty acid ester is preferably lipophilic from the standpoint of its interaction with the wax. Specifically, the sucrose fatty acid ester has an HLB value of preferably 0 or more and 5 or less, more preferably 0 or more and 3 or less. The HLB value is an index that is usually used in the field of emulsifiers and represents a balance between hydrophilicity and hydrophobicity. The HLB value can be determined using a commonly used formula of the Griffin method, the Davis method, the Kawakami method, the method of Organic Conception Diagram, or the like. Alternatively, an HLB value listed on a catalog or the like may be used.

From the standpoint of interaction with the wax, a fatty acid constituting the sucrose fatty acid ester is preferably a fatty acid having 10 to 24 carbon atoms, more preferably a fatty acid having 12 to 24 carbon atoms, still more preferably a fatty acid having 14 to 24 carbon atoms. Specific examples of the fatty acid include lauric acid, palmitic acid, stearic acid, behenic acid, oleic acid, and erucic acid. The sucrose fatty acid ester may be a monoester, or a polyester such as a diester or a triester. Further, the sucrose fatty acid ester may a polyester constituted by two or more kinds of fatty acids. The sucrose fatty acid ester may be used singly, or in combination of two or more kinds thereof.

Examples of commercially available products of the sucrose fatty acid ester include: "RYOTO SUGAR ESTER L-195", "RYOTO SUGAR ESTER P-170", "RYOTO SUGAR ESTER S-070", "RYOTO SUGAR ESTER S-170", "RYOTO SUGAR ESTER S-270", "RYOTO SUGAR ESTER S-370", "RYOTO SUGAR ESTER S-570", "RYOTO SUGAR ESTER O-170", "RYOTO SUGAR ESTER B-370", "RYOTO SUGAR ESTER ER-290", and "RYOTO SUGAR ESTER POS-135" (all of which are manufactured by Mitsubishi Chemical Corporation, trade names); and "DK ESTER F-10", "DK ESTER F-20W", and "DK ESTER F-50" (all of which are manufactured by DKS Co., Ltd., trade names).

The content of the sucrose fatty acid ester is preferably 0.01% by weight or more, more preferably 0.05% by weight or more, but usually 10% by weight or less, preferably 5% by weight or less, more preferably 2.5% by weight or less, with respect to a total amount of the oil or fat, the wax, and the sucrose fatty acid ester that are contained in the oil-and-fat composition of the present embodiment.

Further, a content ratio (weight ratio) of the sucrose fatty acid ester with respect to the wax is preferably 0.01 or higher, more preferably 0.05 or higher, but preferably 5.0 or lower, more preferably 2.0 or lower, still more preferably 1.0 or lower. When the content ratio of the sucrose fatty acid ester with respect to the wax is in this range, the size and the shape of the wax crystals are controlled in a preferred manner, so that the texture of the oil-and-fat composition is likely to be further improved.

The oil-and-fat composition of the present embodiment may also contain an emulsifier other than the sucrose fatty acid ester. It is noted here, however, that the content of the emulsifier is preferably small from the standpoint of preventing the emulsifier from forming crystals separately from the wax crystals.

In the oil-and-fat composition of the present embodiment, it is believed that the sucrose fatty acid ester forms an oleogel network structure together with the wax. Therefore, a total content of the wax and the sucrose fatty acid ester in the oil-and-fat composition of the present embodiment is preferably large from the standpoint of allowing the oil-and-fat composition of the present embodiment to have a moderate hardness at normal temperature. On the other hand, the total content of the wax and the sucrose fatty acid ester is preferably small from the standpoint of allowing the oil-and-fat composition to be easily deformed or disintegrated by an external force at a high temperature such as oral temperature, and thereby improving the melting in the mouth. Accordingly, the total content of the wax and the sucrose fatty acid ester in the oil-and-fat composition of the present embodiment is preferably 7.5% by weight or more, more preferably 8.0% by weight or more, still more preferably 9.0% by weight or more, particularly preferably 10% by weight or more, but preferably 30.0% by weight or less, more preferably 25.0% by weight or less, still more preferably 20.0% by weight or less, particularly preferably 15.0% by weight or less.

### <Texture-Improving Agent>

In the oil-and-fat composition of the present embodiment, the size of wax crystals is expected to be reduced by the sucrose fatty acid ester. In other words, the sucrose fatty acid ester can be used as a texture-improving agent of a wax oleogel that contains an oil or fat and a wax.

In the oil-and-fat composition of the present embodiment (containing the sucrose fatty acid ester), the size of wax crystals is preferably 0.47 or less, more preferably 0.36 or less, with respect to the size of wax crystals that are formed when the sucrose fatty acid ester is excluded from the oil-and-fat composition of the present embodiment.

### <Other Components>

If necessary, the oil-and-fat composition of the present embodiment may also contain components added to food products, such as a sweetener, a stabilizer, a flavoring agent, an antioxidant, and a salt, within a range that does not impair the functions of the present invention.

Examples of the sweetener include sugars, sugar alcohols, and high-intensity sweeteners, specifically the following sweeteners:
sugars: monosaccharides, such as glucose, fructose, xylose, sorbose, galactose, and isomerized sugars; disaccharides, such as sucrose, maltose, lactose, isomerized lactose, and palatinose; and oligosaccharides, such as fructo-oligosaccharides, malto-oligosaccharides, isomalto-oligosaccharides, galacto-oligosaccharides, coupling sugars, and palatinose;
sugar alcohols: monosaccharide alcohols, such as erythritol, sorbitol, xylitol, and mannitol; disaccharide alcohols, such as maltitol, isomaltitol, and lactitol; trisaccharide alcohols, such as maltotriitol, isomaltotriitol, and pinitol; tetra- and higher-saccharide alcohols, such as oligosaccharide alcohols; and powder reduced maltose syrups; and
high-intensity sweeteners: aspartame, neotame, sucralose, stevia, and the like.

Examples of the stabilizer include galactomannan, xanthan gum, carrageenan, gum arabic, tamarind gum, gellan gum, glucomannan, and cellulose.

Examples of the antioxidant include: plant extracts, such as rosemary extracts, tea extracts, raw coffee bean extracts, grape seed extracts, and myrica extracts; tocopherol; tocotrienol; ascorbyl palmitate; dibutylhydroxytoluene; and butylhydroxyanisole.

Examples of the salt include: chlorides, such as sodium chloride, potassium chloride, and magnesium chloride; carbonates, such as sodium carbonate, potassium carbonate, and calcium carbonate; bicarbonates, such as sodium bicarbonate; phosphates, such as disodium phosphate, trisodium phosphate, dipotassium phosphate, and tripotassium phosphate; sodium polyphosphate; citrates, such as sodium citrate; and sodium lactate. Magnesium-containing salts are particularly preferred, and examples of magnesium-containing salts that can be used in food applications include whey minerals, magnesium chloride, magnesium oxide, magnesium carbonate, magnesium sulfate, bittern (crude seawater magnesium chloride), dolomite, unrefined salt, magnesium stearate, magnesium hydrogen phosphate, trimagnesium phosphate, magnesium silicate, magnesium hydroxide, magnesium acetate, magnesium citrate, magnesium malate, magnesium benzoate, magnesium gluconate, magnesium L-glutamate, sepiolite, talc, and phytin.

### <Physical Properties of Oil-and-Fat Composition>

A melting point of the oil-and-fat composition of the present embodiment is not particularly limited; however, it is usually 15°C or higher, preferably 25°C or higher, more preferably 35°C or higher, but usually 90°C or lower, preferably 80°C or lower, more preferably 75°C or lower. When the melting point is in this range, favorable texture in terms of hardness, melting in the mouth, and the like is likely to be obtained when the oil-and-fat composition of the present embodiment is used in a food application.

The viscoelasticity of a substance is represented by storage modulus G', loss modulus G", and a ratio thereof, namely loss tangent tanδ. When the loss tangent tanδ is more than 1, i.e. G' < G", the substance exhibits solid properties, while when the loss tangent tanδ is less than 1, i.e. G' > G", the substance exhibits liquid properties. The oil-and-fat composition of the present embodiment usually has a loss tangent tanδ of more than 1 in a stationary state. Further, when the strain value γ is at a certain level or higher, the loss tangent tanδ is usually less than 1, and a gel structure thus collapses. In food, it has been reported that the lower the strain value γ at which structural collapse occurs, the more likely is "favorable melting in the mouth" to be obtained.

In the oil-and-fat composition of the present embodiment, the storage modulus G' when the strain value γ is 0.01 at 35°C around the oral temperature is not particularly limited; however, it is usually 10 Pa or more, preferably 20 Pa or more, more preferably 100 Pa or more, but usually 200,000 Pa or less, preferably 100,000 Pa or less, more preferably 50,000 Pa or less, particularly preferably 20,000 Pa or less. When the storage modulus G' is in this range, a cohesive gel having good shape retainability is likely to be obtained.

In the oil-and-fat composition of the present embodiment, the loss modulus G" when the strain value γ is 0.01 at 35°C is not particularly limited; however, it is usually 10 Pa or more, preferably 100 Pa or more, but usually 100,000 Pa or less, preferably 50,000 Pa or less, more preferably 20,000 Pa or less, particularly preferably 7,000 Pa or less. When the loss modulus G" is in this range, a cohesive gel having good shape retainability is likely to be obtained.

In the oil-and-fat composition of the present embodiment, the strain value γ when the loss tangent tanδ at 35°C is 1 is not particularly limited; however, it is usually 0.1 or more and 1.0 or less, preferably 0.1 or more and 0.7 or less, more preferably 0.1 or more and 0.5 or less, particularly preferably 0.1 or more and 0.4 or less. When the strain value γ is in this range, favorable melting in the mouth is likely to be obtained when the oil-and-fat composition of the present embodiment is used in a food application.

The dynamic viscoelasticity of the oil-and-fat composition of the present embodiment is measured using a dynamic viscoelasticity analyzer.

A sensory evaluation of the oil-and-fat composition of the present embodiment can be performed in the following manner. The oil-and-fat composition of the present embodiment is placed on the tongue and chewed in a rubbing manner using the tongue and the upper jaw, and the resulting feeling of roughness (smoothness) and how the oil-and-fat composition spreads in the mouth (melting in the mouth) can be evaluated. The smoothness may be evaluated in terms of relative smoothness to the smoothness of a composition obtained by removing the sucrose fatty acid ester from the oil-and-fat composition of the present embodiment. Further, the melting in the mouth may be evaluated in terms of whether or not the oil-and-fat composition spreads in the mouth more quickly and whether or not lumps and roughness remain in the mouth, relative to a composition obtained by removing the sucrose fatty acid ester from the oil-and-fat composition of the present embodiment.

### <Formulation of Oil-and-Fat Composition>

In the oil-and-fat composition of the present embodiment, a total amount of the oil or fat, the wax, and the sucrose fatty acid ester is preferably large since this makes the oil-and-fat composition more likely to exhibit the above-described physical properties and, particularly, favorable melting in the mouth is likely to be obtained when the oil-and-fat composition is used in a food application. Accordingly, the total amount of the oil or fat, the wax, and the sucrose fatty acid ester that are contained in the oil-and-fat composition of the present embodiment is preferably 30% by weight or more, more preferably 60% by weight or more, still more preferably 80% by weight or more. An upper limit of the total amount is 100% by weight.

### <Method of Producing Oil-and-Fat Composition>

The oil-and-fat composition of the present embodiment can be produced by a method that includes: the step of mixing an oil or fat, a wax, and a sucrose fatty acid ester at the above-described ratios; and the step of heat-dissolving and then cooling and solidifying a mixture obtained by the previous step. The heating temperature is preferably high from the standpoint of the ease of dissolving the wax and the sucrose fatty acid ester in the oil or fat; however, the heating temperature is preferably low for the inhibition of reaction and deterioration of the components. Accordingly, the heating temperature is preferably 40°C or higher, more preferably 60°C or higher, but preferably 120°C or lower, more preferably 100°C or lower. The cooling after the heat-dissolving may be performed slowly or rapidly to room temperature. Stirring may also be performed during the cooling.

### <Use of Oil-and-Fat Composition>

The oil-and-fat composition of the present embodiment can be used as a substitute for a solid fat or a hydrogenated oil in various foods. Specific examples of the use of the oil-and-fat composition include: food and beverages, such as creamy foods and milk substitutes; retort-processed dietary supplements; functional foods, such as liquid diet, high-calorie diet, and infant nutrition products; oral vaccines; oil/fat processed products, such as fat spread and flour paste; various sauces and soups, such as curry, coffee creamer, mayonnaise, dressing, mousse, pasta sauce, stew, demiglace sauce, white sauce, and tomato sauce; retort-processed foods and compound seasonings, such as Chinese soup stocks and rice bowl mixtures; confectioneries and desserts, such as yogurt, cheese, ice creams, creams, caramels, candies, chewing gums, chocolate, cookies, biscuits, cakes, pies, snacks, crackers, Japanese sweets, rice sweets, bean sweets, jellies, and puddings; processed livestock products, such as hamburger steaks, meatballs, and canned seasoned meat; processed marine products; meat substitutes; frozen foods; refrigerated foods; instant foods, such as instant noodles, cup noodles, and instant soups and stews; fortified foods; and tube-feeding nutritional preparations.

The oil-and-fat composition of the present embodiment exhibits excellent melting in the mouth and is, therefore, preferably used in food applications and more preferably used in meat substitute applications. In other words, foods containing the oil-and-fat composition of the present embodiment are preferred because of their excellent texture. Further, meat substitutes containing the oil-and-fat composition of the present embodiment are also preferred because of their excellent texture.

<Plant-Based Meat>

As compared to the existing solid oils or fats, the oil-and-fat composition of the present embodiment contains less saturated fatty acid and trans fatty acid. Therefore, the oil-and-fat composition of the present embodiment is particularly preferably used in a plant-based meat since it is appealing to one's health. In other words, a plant-based meat containing the oil-and-fat composition of the present embodiment (hereinafter, may be referred to as "the plant-based meat of the present embodiment") is preferred since it has excellent texture and is healthy.

The plant-based meat of the present embodiment is a type of animal meat substitute using a vegetable protein. The term "plant-based meat" used herein also encompasses a meat using a vegetable protein in place of an animal protein used in a so-called processed meat such as a sausage or a ham.

The plant-based meat of the present embodiment contains the oil-and-fat composition according to one embodiment of the present invention, and a vegetable protein. Examples of the vegetable protein include: bean proteins, such as pea protein, soy protein, mung bean protein, chickpea protein, fava bean protein, and lentil protein; shiitake mushroom protein; and wheat protein. Thereamong, bean proteins are preferred since they are unlikely to cause allergic symptoms and are rich in nutrients. The amount of the oil-and-fat composition and the vegetable protein that are contained in the plant-based meat of the present embodiment may be adjusted as appropriate in accordance with a cooking method of the plant-based meat as well as the type and the like of a dish using the plant-based meat. The plant-based meat of the present embodiment preferably contains 10 to 90% by weight of the vegetable protein and 0.1 to 50% by weight of the oil-and-fat composition. Further, the plant-based meat of the present embodiment preferably contains the oil-and-fat composition in an amount of 0.1 to 83% by weight with respect to the vegetable protein.

The plant-based meat of the present embodiment preferably contains a binder. The binder refers to an agent that binds the components in the plant-based meat, such as the vegetable protein and the oil or fat. Specific examples of the binder include cellulose derivatives, polysaccharide thickeners, and starch. When the plant-based meat of the present embodiment contains a binder, the content thereof is preferably large from the standpoint of the moldability of the plant-based meat; however, it is preferably small from the standpoint of the texture such as chewiness. Therefore, specifically, the content of the binder in the plant-based meat is preferably 0.1% by weight or more, more preferably 0.5% by weight or more, particularly preferably 1.0% by weight or more, but preferably 10.0% by weight or less, more preferably 8.0% by weight or less, particularly preferably 5.0% by weight or less.

The plant-based meat of the present embodiment may further contain sweeteners such as sugar, seasonings such as salt and soy sauce, extracts, dietary fibers, and the like.

### EXAMPLES

The present invention will now be described in more detail by way of Examples; however, needless to say, the scope of the present invention is not limited to the modes shown in the below-described Examples. In the below-described Examples, unless otherwise specified, "%" means "% by weight".

### <Raw Materials>

Raw materials used in Examples are shown below.
- Rapeseed oil: SARASARA CANOLA OIL, manufactured by J-OIL MILLS, Inc. (saturated fatty acid ratio: 4 to 8%)
- Rice bran wax (RBX): RICE WAX SS-2, manufactured by Boso Oil and Fat Co., Ltd. (number of carbon atoms of wax ester: 40 to 56)
- Candelilla wax (CLX): TOWAX-4F3, manufactured by Toa Kasei Co., Ltd. (number of carbon atoms of wax ester: 34 to 56, number of carbon atoms of hydrocarbon: 27 to 33)
- Sucrose behenate (B-370): RYOTO SUGAR ESTER B-370, manufactured by Mitsubishi Chemical Corporation, HLB = about 3
- Sucrose palmitate (P-170): RYOTO SUGAR ESTER P-170, manufactured by Mitsubishi Chemical Corporation, HLB = about 1
- Sucrose laurate (L-195): RYOTO SUGAR ESTER L-195, manufactured by Mitsubishi Chemical Corporation, HLB = about 1
- Glycerin monobehenate (GMB): DANISCO CRYSTALLIZER 110R, HLB = about 4
- Propylene glycol monobehenate (PGMB): DANISCO PGMB, HLB = about 3
- Sorbitan tribehenate (STB): POEM B-150, manufactured by Riken Vitamin Co., Ltd., HLB = about 2.5
- Soybean lecithin (lecithin, Lec.): SLP-WHITE, manufactured by Tsuji Oil Mills Co., Ltd., HLB = 3

### <Production of Oil-and-Fat Compositions>

Raw materials were mixed in a glass container in accordance with the respective formulations shown in Tables 1 and 2 (in these Tables, "Added amount" is in % by weight), and subsequently heated for 90 minutes using a 90°C heater. In this heating, the resulting mixtures were each stirred using VORTEX-2 GENIE at a strength of 5, and it was visually confirmed that the raw materials were completely dissolved. Thereafter, the glass container was immersed in a 4°C thermostat water bath and cooled for at least 60 minutes at a rate of 5°C/min or faster, whereby oleogels of Examples 1 to 7 and Comparative Examples 1 to 12 were each obtained. These oleogels were stored at room temperature (25°C) until being used in the below-described measurement.

**Table 1**

| | | Oil or fat | | WAX | | Emulsifier | |
|---|---|---|---|---|---|---|---|
| | | Type of oil or fat | Added amount (%) | Type of wax | Added amount (%) | Type of emulsifier | Added amount (%) |
| Comparative Example 1 | RBX BLANK | Rapeseed oil | 90.0 | RBX | 10.0 | - | 0 |
| Comparative Example 2 | RBX+GMB | Rapeseed oil | 89.0 | RBX | 10.0 | GMB | 1.0 |
| Comparative Example 3 | RBX+PGMB | Rapeseed oil | 89.0 | RBX | 10.0 | PGMB | 1.0 |
| Comparative Example 4 | RBX+PGMB(0.1) | Rapeseed oil | 89.9 | RBX | 10.0 | PGMB | 0.1 |
| Comparative Example 5 | RBX+STB | Rapeseed oil | 89.0 | RBX | 10.0 | STB | 1.0 |
| Comparative Example 6 | RBX+Lec. | Rapeseed oil | 89.0 | RBX | 10.0 | Lecithin | 1.0 |
| Example 1 | RBX+B-370 | Rapeseed oil | 89.0 | RBX | 10.0 | B-370 | 1.0 |
| Example 2 | RBX+B-370(0.1) | Rapeseed oil | 89.9 | RBX | 10.0 | B-370 | 0.1 |
| Example 3 | RBX+P-170 | Rapeseed oil | 89.0 | RBX | 10.0 | P-170 | 1.0 |
| Example 4 | RBX+L-195 | Rapeseed oil | 89.0 | RBX | 10.0 | L-195 | 1.0 |

**Table 2**

| | | Oil or fat | | WAX | | Emulsifier | |
|---|---|---|---|---|---|---|---|
| | | Type of oil or fat | Added amount (%) | Type of wax | Added amount (%) | Type of emulsifier | Added amount (%) |
| Comparative Example 7 | CLX BLANK | Rapeseed oil | 90.0 | CLX | 10.0 | - | 0 |
| Comparative Example 8 | CLX+GMB | Rapeseed oil | 89.0 | CLX | 10.0 | GMB | 1.0 |
| Comparative Example 9 | CLX+PGMB | Rapeseed oil | 89.0 | CLX | 10.0 | PGMB | 1.0 |
| Comparative Example 10 | CLX+PGMB(0.1) | Rapeseed oil | 89.9 | CLX | 10.0 | PGMB | 0.1 |
| Comparative Example 11 | CLX+STB | Rapeseed oil | 89.0 | CLX | 10.0 | STB | 1.0 |
| Comparative Example 12 | CLX+Lec. | Rapeseed oil | 89.0 | CLX | 10.0 | Lecithin | 1.0 |
| Example 5 | CLX+B-370 | Rapeseed oil | 89.0 | CLX | 10.0 | B-370 | 1.0 |
| Example 6 | CLX+B-370(0.1) | Rapeseed oil | 89.9 | CLX | 10.0 | B-370 | 0.1 |
| Example 7 | CLX+P-170 | Rapeseed oil | 89.0 | CLX | 10.0 | P-170 | 1.0 |

### <Microscope Observation>

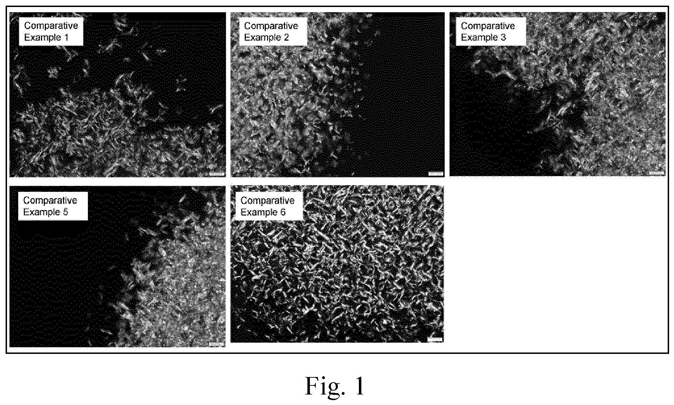

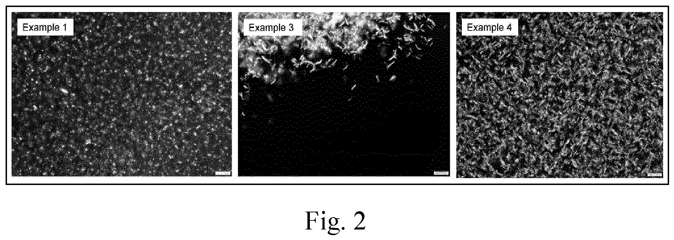

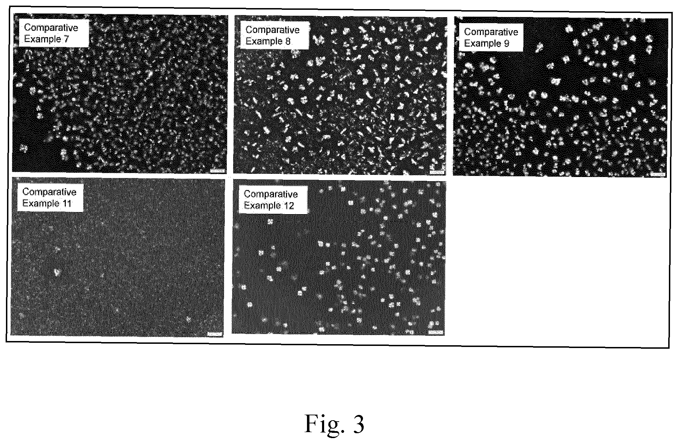

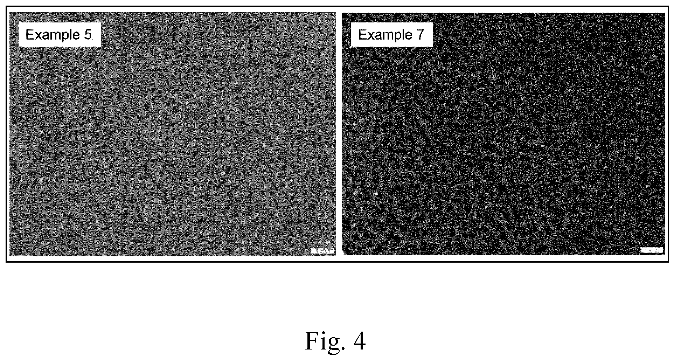

The above-obtained oil-and-fat compositions were heated to 90°C using a heater. It was visually confirmed that the oil-and-fat compositions were each completely dissolved by this heating. A small amount of each oil-and-fat composition was placed on a glass slide, and a cover glass was placed thereon to thinly spread the oil-and-fat composition. This glass slide was set on a cooling/heating microscope stage (LINKAM THMS600) and cooled to 25°C at a rate of 5°C/min or faster. The size of wax crystals in the oil-and-fat composition was observed under a polarization microscope (BX-53, manufactured by OLYMPUS Corporation). The results thereof are shown in FIGs. 1 to 4.

Further, the long-side length of the wax crystals was measured using an image analysis software (WinROOF2015). The long-side length was measured for at least 20 crystals, and an average of the thus measured values was calculated. The results thereof are shown in Table 3.

**Table 3**

| | | Crystal size (long side, *µ*m) |
|---|---|---|
| Comparative Example 1 | RBX BLANK | 23.82 |
| Comparative Example 2 | RBX+GMB | 11.78 |
| Comparative Example 3 | RBX+PGMB | 11.9 |
| Comparative Example 5 | RBX+STB | 14.79 |
| Comparative Example 6 | RBX+Lec. | 11.16 |
| Example 1 | RBX+B-370 | 3.35 |
| Example 3 | RBX+P-170 | 7.11 |
| Example 4 | RBX+L-195 | 8.52 |
| Example 7 | CLX BLANK | 7.11 |
| Example 8 | CLX+GMB | 8.44 |
| Example 9 | CLX+PGMB | 7.43 |
| Example 11 | CLX+STB | 3.68 |
| Example 12 | CLX+Lec. | 6.56 |
| Example 5 | CLX+B-370 | 1.68 |
| Example 7 | CLX+P-170 | 1.46 |

As apparent from Table 3, the rice bran wax crystals of Comparative Example 1, in which no emulsifier was contained, had a large long-side length of about 20 um. Further, the rice bran wax crystals of Comparative Examples 2, 3, 5, and 6, to which glycerin monobehenate, propylene glycol monobehenate, sorbitan tribehenate, or soybean lecithin was added, had a long-side length of about 10 to 15 µm, which is about 1/2 to 3/4 of that of Comparative Example 1.

On the other hand, the rice bran wax crystals of Examples 1, 3, and 4, to which a sucrose fatty acid ester was added, had a small long-side length of about 3 to 9 um. This is about 1/10 to 1/2 of the long-side length of the rice bran wax crystals without an addition of an emulsifier, and the rice bran wax crystals of Examples 1, 3, and 4 can thus be regarded as fine crystals.

The candelilla wax crystals of Comparative Example 7, to which no emulsifier was added, were confirmed to be large crystals with a long-side length of about 7 um. In addition, the candelilla wax crystals of Comparative Examples 8, 9, and 12, to which glycerin monobehenate, propylene glycol monobehenate, or soybean lecithin was added, had a long-side length of about 6 to 9 µm, and a large difference from the long-side length of the candelilla wax crystals without an addition of an emulsifier was not observed. Further, the candelilla wax crystals of Comparative Example 11, to which sorbitan tribehenate was added, had a long-side length of about 3.5 µm, which is about 1/2 of that of Comparative

### Example 7.

On the other hand, the candelilla wax crystals of Examples 5 and 7, to which a sucrose fatty acid ester was added, had a long-side length of about 1 to 2 um, which is about 1/7 to 1/4 of that of Comparative Example 7, and these candelilla wax crystals were notably finer than the candelilla wax crystals of Comparative Examples 7 to 9, 11, and 12.

From the above-described results, it was demonstrated that the crystal size of a wax can be reduced to about 1/10 to 1/2 by adding a sucrose fatty acid ester to the wax.

### <Measurement of Dynamic Viscoelasticity>

A ϕ35-mm 1° cone plate was set on a dynamic viscoelasticity analyzer (HAAKE RheoStress 600). The oil-and-fat compositions of Examples 1, 3, and 4 and Comparative Examples 1 to 3, 5, and 6 were each placed on the plate, and the gap was set at 0.052 mm.

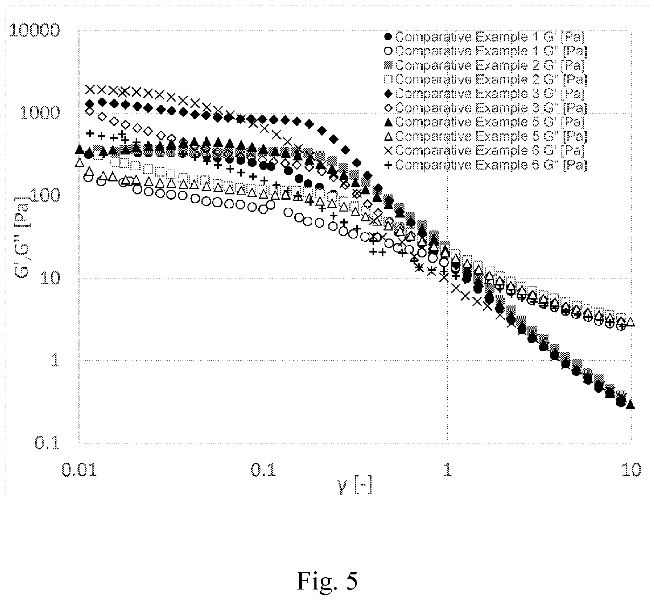

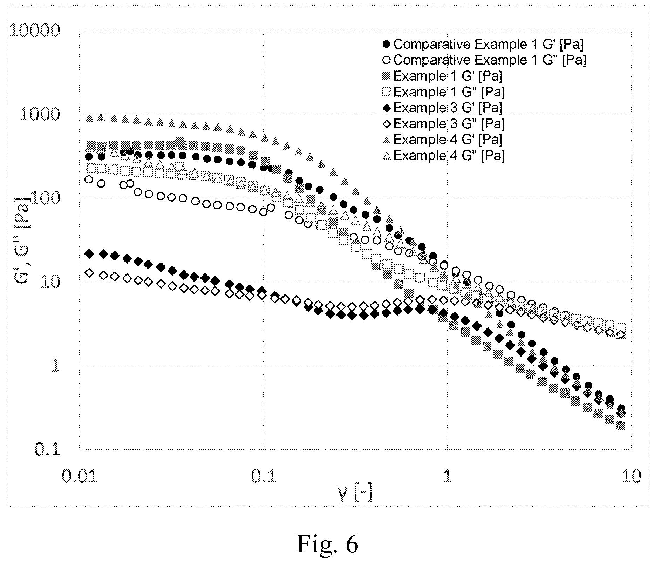

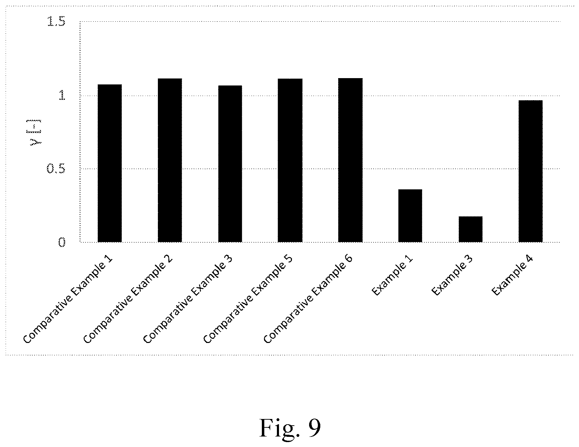

At 35°C, the storage modulus G', the loss modulus G", and the loss tangent tanδ were measured with the strain value γ being 0.01 to 10. The results thereof are shown in FIGs. 5 and 6. Further, the results of calculating the strain value γ at G' = G" and tanδ = 1 for each oil-and-fat composition are shown in FIG. 9.

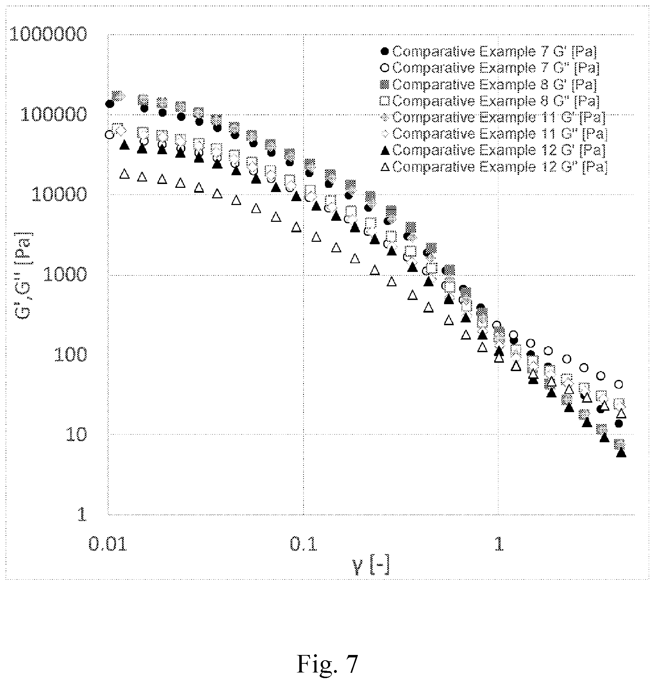

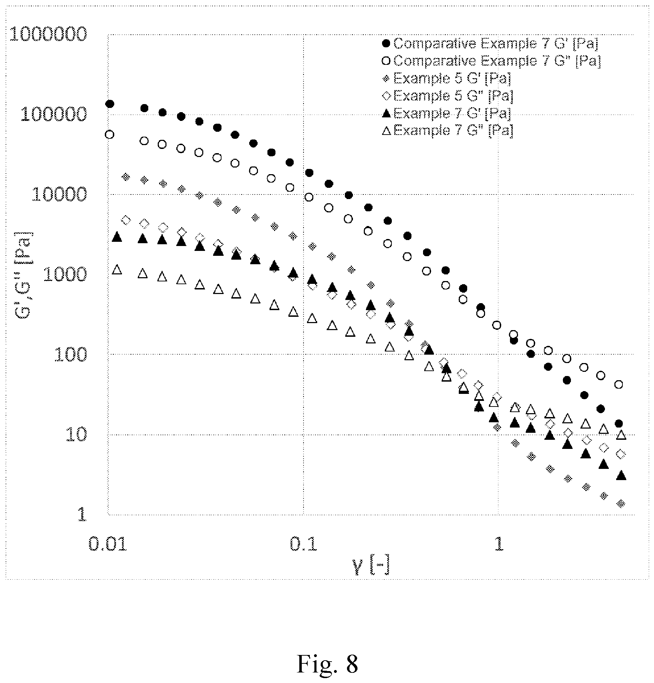

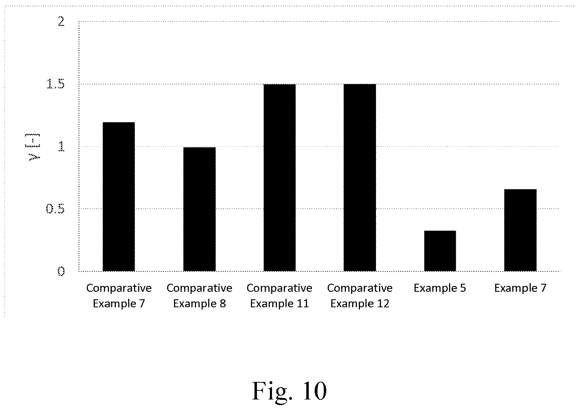

The storage modulus G', the loss modulus G", and the loss tangent tanδ of each oil-and-fat composition of Examples 5 and 7 and Comparative Examples 7, 8, 11, and 12 were measured in the same manner as described above, except that the cone plate was changed to a ϕ20-mm parallel plate and the gap was set at 0.01 mm. The results thereof are shown in FIGs. 7 and 8. Further, the results of calculating the strain value γ at G' = G" and tanδ = 1 for each oil-and-fat composition are shown in FIG. 10.

As shown in FIG. 9, in Examples 1, 3, and 4 where rice bran wax was used as a wax and a sucrose fatty acid ester was added, the strain value γ at tanδ = 1 was smaller than that in Comparative Examples 1 to 3, 5, and 6; therefore, an effect of improving the melting of an oleogel in the mouth attributed to a sucrose fatty acid ester was demonstrated. Particularly, in Examples 1 and 3 where a sucrose fatty acid ester having 16 to 22 carbon atoms was added, the strain value γ at tanδ = 1 was notably small.

Further, as shown in FIG. 10, in Examples 5 and 7 where candelilla wax was used as a wax and a sucrose fatty acid ester was added, the strain value γ at tanδ = 1 was smaller than that in Comparative Examples 7, 8, 11, and 12; therefore, an effect of improving the melting of an oleogel in the mouth attributed to a sucrose fatty acid ester was confirmed.

### <Sensory Evaluation>

Each oil-and-fat composition was cut out into a size of 5 mm × 5 mm × 5 mm. The thus cut oil-and-fat composition was placed on the tongue and chewed in a rubbing manner using the tongue and the upper jaw, and the resulting feeling of roughness (smoothness) and how the oil-and-fat composition spread in the mouth (melting in the mouth) were evaluated.

The smoothness was evaluated by assigning: a score of 3 to BLANK (Comparative Example 1 or 7); a score of 4 or 5 when the oil-and-fat composition was smoother and roughness was relatively not felt; or a score of 2 or 1 when roughness was felt stronger and the oil-and-fat composition was not smooth.

The melting in the mouth was evaluated by assigning: a score of 3 to BLANK (Comparative Example 1 or 7); a score of 4 or 5 when the oil-and-fat composition spread in the mouth more quickly; or a score of 2 or 1 when lumps and roughness remained in the mouth. The results of these evaluations are shown in Table 4.

**Table 4**

| | | Smoothness | Melting in mouth |
|---|---|---|---|
| Comparative Example 1 | RBX BLANK | 3 | 3 |
| Comparative Example 3 | RBX+PGMB | 2 | 3 |
| Comparative Example 4 | RBX+PGMB(0.1) | 3 | 3 |
| Comparative Example 5 | RBX+STB | 2 | 3 |
| Example 1 | RBX+B-370 | 5 | 5 |
| Example 2 | RBX+B-370(0.1) | 3 | 4 |
| Example 4 | RBX+L-195 | 3 | 4 |
| Comparative Example 7 | CLX BLANK | 3 | 3 |
| Comparative Example 9 | CLX+PGMB | 3 | 3 |
| Comparative Example 10 | CLX+PGMB(0.1) | 3 | 3 |
| Comparative Example 11 | CLX+STB | 2 | 3 |
| Example 5 | CLX+B-370 | 3 | 4 |
| Example 6 | CLX+B-370(0.1) | 3 | 3 |
| Example 7 | CLX+P-170 | 5 | 5 |

In Comparative Example 1 where rice bran wax was used as a wax and an emulsifier was not used, roughness was felt on the tongue, and the oil-and-fat composition was not smooth and exhibited poor melting in the mouth. In Comparative Examples 3 to 5 where an emulsifier other than a sucrose fatty acid ester was added, as compared to Comparative Example 1, the smoothness was about the same or poorer, and the melting in the mouth was about the same.

On the other hand, in Examples 1, 2, and 4 where a sucrose fatty acid ester was added, the smoothness was the same as or better than that of Comparative Example 1 and, particularly, the oil-and-fat composition of Example 1 was extremely smooth. From these results, the oil-and-fat composition of the present embodiment was demonstrated to quickly spread in the mouth when chewed and to exhibit favorable melting in the mouth.

In Comparative Example 7 where candelilla wax was used as a wax and an emulsifier was not used, large lumps remained on the tongue, and the oil-and-fat composition was not smooth and exhibited poor melting in the mouth. In Comparative Examples 9 to 11 where an emulsifier other than a sucrose fatty acid ester was added, as compared to Comparative Example 7, slightly larger lumps remained in the mouth, and the melting in the mouth was about the same.

On the other hand, in Examples 5 to 7 where a sucrose fatty acid ester was added, the smoothness was the same as or better than that of Comparative Example 7, and particularly, the oil-and-fat composition of Example 7 was extremely smooth. From these results, the oil-and-fat composition of the present embodiment was demonstrated to quickly spread in the mouth when chewed and to exhibit favorable melting in the mouth. Especially, the oil-and-fat composition of Example 7 exhibited extremely favorable melting in the mouth.

From the above-described results, it was demonstrated that, by incorporating a sucrose fatty acid ester in an oil-and-fat composition, the smoothness of the oil-and-fat composition is improved (a rough texture is improved), and favorable melting in the mouth (an effect of quickly spreading in the mouth when chewed) is obtained. These effects are believed to be attributed to a reduction in the size of wax crystals by the incorporation of the sucrose fatty acid ester (see the results of microscope observation).

### <Production of Oil-and-Fat Compositions>

Raw materials were mixed in a glass or stainless-steel container in accordance with the respective formulations shown in Table 5 (in Table 5, "Added amount" is in % by weight), and subsequently heated for 90 minutes using a 90°C heater or thermostat water bath. In this heating, the resulting mixtures were each stirred by hand or using VORTEX-2 GENIE at a strength of 5, and it was visually confirmed that the raw materials were completely dissolved. Thereafter, the glass container was immersed in a 4°C thermostat water bath and cooled for at least 60 minutes at a rate of 5°C/min or faster, or the thus heat-dissolved oil-and-fat composition was allowed to cool in a 4°C refrigerator, whereby oleogels of Examples 8 to 10 were each obtained. These oleogels were stored at room temperature (25°C) until being used in the below-described measurement.

### <Microscope Observation>

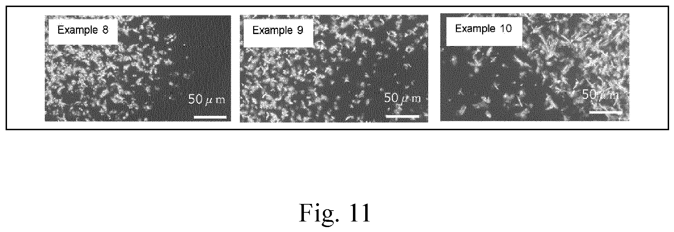

The above-obtained oil-and-fat compositions were heated to 90°C using a heater. It was visually confirmed that the oil-and-fat compositions were each completely dissolved by this heating. A small amount of each oil-and-fat composition was placed on a glass slide, and a cover glass was placed thereon to thinly spread the oil-and-fat composition. This glass slide was set on a cooling/heating microscope stage (LINKAM THMS600) and cooled to 25°C at a rate of 5°C/min or faster. The size of wax crystals in the oil-and-fat composition was observed under a polarization microscope (BX-53, manufactured by OLYMPUS Corporation). The results thereof are shown in FIG. 11.

Further, the long-side length of the wax crystals was measured using an image analysis software (WinROOF2015). The long-side length was measured for at least 20 crystals, and an average of the thus measured values was calculated. The results thereof are shown in Table 5.

**Table 5**

| | | Oil or fat | | WAX | | Emulsifier | | Crystal size (long side, *µ*m) |
|---|---|---|---|---|---|---|---|---|
| | | Type of oil or fat | Added amount (%) | Type of wax | Added amount (%) | Type of emulsifier | Added amount (%) | |
| Example 8 | RBX + P-170 | Rapeseed oil | 92 | RBX | 7 | P-170 | 1 | 6.45 |
| Example 9 | RBX + P-170 | Rapeseed oil | 92.5 | RBX | 7 | P-170 | 0.5 | 7.74 |
| Example 10 | RBX + P-170 | Rapeseed oil | 92.9 | RBX | 7 | P-170 | 0.1 | 17.24 |

As apparent from Table 5, it was demonstrated that, in the oil-and-fat compositions of Examples 8 and 9 which contained rice bran wax and a sucrose fatty acid ester in a total amount of 7.5% by weight or more, the size of the crystals of the wax was particularly small.

### <Production of Plant-Based Meats>

Using the above-obtained oil-and-fat compositions and soy protein, plant-based meats (meat-like processed foods) were produced in accordance with the respective formulations shown in Table 6 (in Table 6, "Added amount" is in % by weight).

First, using a stirrer ("KM300", manufactured by Aicohsha MFG. Co., Ltd.), onion powder, dark soy sauce, caster sugar, yeast extract, table salt, emulsion curd, and each oil-and-fat composition were uniformly mixed with stirring. To the resulting mixture, granular soy protein that had been rehydrated for 30 minutes was added, and the resultant was further kneaded with stirring until a coherent and uniform dough state was achieved. The thus obtained coherent dough was molded into a piece of 6 cm in diameter and 2 cm in thickness, and both sides of this piece were grilled on a 220°C iron plate for 90 seconds on each side, and subsequently further grilled for 10 minutes in a convection oven ("TSCO-6EDN", manufactured by Tanico Co., Ltd.) at 150°C with 100% steam, whereby a plant-based meat was produced.

**Table 6**

| Raw material | Product name (manufacturer) | Mixing ratio (% by weight) | | |
|---|---|---|---|---|
| | | Example 11 | Example 12 | Comparative Example 13 |
| Granular soy protein | "NEW FUJINIC 43N", manufactured by Fuji Oil Co., Ltd. | 16.5 | 16.5 | 16.5 |
| Rehydration water | | 33 | 33 | 33 |
| Onion powder | manufactured by S&B FOODS Inc. | 3 | 3 | 3 |
| Dark soy sauce | manufactured by Kikkoman Corporation | 3 | 3 | 3 |
| Caster sugar | Spoon Mark "JOHAKUTO" | 1 | 1 | 1 |
| Seasoning | Vegetable bouillon | 0.8 | 0.8 | 0.8 |
| Table salt | - | 0.2 | 0.2 | 0.2 |
| Emulsion curd | Methylcellulose (manufactured by Shin-Etsu Chemical Co., Ltd.) | 37.5 | 37.5 | 37.5 |
| | Rapeseed oil 11.0% | | | |
| | Fractionated soy protein (manufactured by The Nisshin OilliO Group, Ltd.) 11.0% | | | |
| | Cold water, 75.0% mixture | | | |
| Oil-and-fat compositi | Example 3 | 5 | 0 | 0 |
| | RBX(10% by weight) + P-170(0.1% by weight) | 0 | 5 | 0 |
| | Comparative Example 1 | 0 | 0 | 5 |

### <Sensory Evaluation>

For the thus produced plant-based meats, four panelists performed sensory evaluation on three properties: tenderness in chewing; feeling of unity; and moist feeling, based on the below-described criteria. These properties of Comparative Example 13 were evaluated with a score of 0, and average scores of the evaluation results of Examples 11 and 12 relative to Comparative Example 13 are shown in Table 7.

### [Tenderness in Chewing]

During repeated chewing, a score of +2 was given when tenderness was felt strongly; a score of +1 was given when tenderness was slightly strongly felt; a score of 0 was given when tenderness was equivalent to that of Comparative Example 13; a score of -1 was given when tenderness was slightly weakly felt; or a score of -2 was given when tenderness was felt weakly.

### [Feeling of Unity]

In a process in which each plant-based meat was repeatedly chewed and loosened in the mouth, a score of +2 was given when the meat fell apart in a well-unified manner; a score of +1 was given when the meat fell apart in a rather unified manner; a score of 0 was given when the feeling of unity was equivalent to that of Comparative Example 13; a score of -1 was given when the meat fell apart in a slightly crumbling manner; or a score of -2 was given when the meat fell apart in a crumbling manner.

### [Moist Feeling]

During eating, a score of +2 was given when a strong moist feeling was obtained; a score of +1 was given when a slightly strong moist feeling was obtained; a score of 0 was given when the moist feeling was equivalent to that of Comparative Example 13; a score of -1 was given when a weak moist feeling was obtained along with a feeling of slight dryness; or a score of -2 was given when a weak moist feeling was obtained along with a feeling of dryness.

**Table 7**

| | Content of P-170 in oil-and-fat composition | Tenderness in chewing | Feeling of unity | Moist feeling |
|---|---|---|---|---|
| Example 11 | 1% by weight | 1.5 | 1.0 | 1.3 |
| Example 12 | 0.1% by weight | 1.5 | 1.8 | 1.5 |
| Comparative Example 13 | 0% by weight | 0 | 0 | 0 |

As compared to Comparative Example 13, superior tenderness in chewing, superior feeling of unity, and superior moist feeling were obtained in Examples 11 and 12; therefore, it was demonstrated that the texture of a plant-based meat is improved by the oil-and-fat composition according to one embodiment of the present invention; that the oil-and-fat composition according to one embodiment of the present invention is an excellent texture-improving agent; and that the plant-based meat according to one embodiment of the present invention has excellent texture. These excellent texture characteristics are believed to be a result of size reduction and change in physical properties of the wax crystals contained in the oil-and-fat composition.

### <Production of Oil-and-Fat Composition>

Raw materials were mixed in a glass container in accordance with the formulation shown in Table 8 (in Table 8, "Added amount" is in % by weight), and subsequently heated for 90 minutes using a 90°C heater. In this heating, the resulting mixture was stirred using VORTEX-2 GENIE at a strength of 5, and it was visually confirmed that the raw materials were completely dissolved. Thereafter, the glass container was immersed in a 4°C thermostat water bath and cooled for at least 60 minutes at a rate of 5°C/min or faster, whereby an oleogel of Example 13 was obtained. This oleogel was stored at room temperature (25°C) until being used in the below-described measurement.

**Table 8**

| | Oil or fat | | WAX | | Emulsifier | |
|---|---|---|---|---|---|---|
| | Type of oil or fat | Added amount (%) | Type of wax | Added amount (%) | Type of emulsifier | Added amount (%) |
| Example 13 | Rapeseed oil | 89.9 | RBX | 10.0 | P-170 | 0.1 |

### <Measurement of Melting Point>

Using a differential scanning calorimeter ("DSC-600", manufactured by Hitachi High-Tech Corporation), the melting point was measured for the wax and the oil or fat that were contained in each oil-and-fat composition, as well as the oil-and-fat compositions of Examples 3 and 13 and Comparative Example 1. The values of "melting start temperature to completion temperature" that were read from the thus obtained DSC curves are shown below.
- Rapeseed oil: SARASARA CANOLA OIL, manufactured by J-OIL MILLS, Inc., -30 to 0°C
- Rice bran wax (RBX): RICE WAX SS-2, manufactured by Boso Oil and Fat Co., Ltd., 60 to 85°C
- Candelilla wax (CLX): TOWAX-4F3, manufactured by Toa Kasei Co., Ltd., 45 to 75°C
- Comparative Example 1: 50 to 75°C
- Example 3: 50 to 75°C
- Example 13: 50 to 75°C

## Claims

1. An oil-and-fat composition for food, comprising:
an oil or fat;
a wax; and
a sucrose fatty acid ester.

2. The oil-and-fat composition for food according to claim 1, comprising the oil or fat, the wax, and the sucrose fatty acid ester in a total of 30 to 100% by weight,
wherein
a total content of the wax and the sucrose fatty acid ester is 7.5% by weight or more, and
a content ratio (weight ratio) of the sucrose fatty acid ester with respect to the wax is 0.01 or higher and 5.0 or lower.

3. The oil-and-fat composition for food according to claim 1 or 2, wherein the sucrose fatty acid ester has an HLB value of 0 or more and 5 or less.

4. The oil-and-fat composition for food according to claim 1 or 2, wherein a fatty acid constituting the sucrose fatty acid ester has 10 to 24 carbon atoms.

5. The oil-and-fat composition for food according to claim 1 or 2, wherein the wax is a vegetable wax.

6. The oil-and-fat composition for food according to claim 1 or 2, wherein the wax is rice bran wax or candelilla wax.

7. The oil-and-fat composition for food according to claim 1 or 2, which is an oleogel.

8. The oil-and-fat composition for food according to claim 1 or 2, wherein the food is a plant-based meat.

9. A wax oleogel texture-improving agent, comprising a sucrose fatty acid ester.

10. A food, comprising the oil-and-fat composition for food according to claim 1 or 2.

11. A plant-based meat, comprising:
the oil-and-fat composition for food according to claim 1 or 2; and
a vegetable protein,
wherein the plant-based meat comprises 0.1 to 50% by weight of the oil-and-fat composition for food, and 10 to 90% by weight of the vegetable protein.

12. The plant-based meat according to claim 11, further comprising a binder.

13. A method of producing an oil-and-fat composition for food that comprises an oil or fat, a wax, and a sucrose fatty acid ester, the method comprising:
the step of mixing the oil or fat, the wax, and the sucrose fatty acid ester such that a total content of the wax and the sucrose fatty acid ester is 7.5% by weight or more, and a content ratio (weight ratio) of the sucrose fatty acid ester with respect to the wax is 0.01 or higher and 5.0 or lower; and
the step of heat-dissolving and then cooling and solidifying a mixture obtained by the previous step.
